# EUROPEAN PATENT SPECIFICATION

(11) **EP 3 543 079 B1**
(45) Date of publication and mention of the grant of the patent: **05.01.2022**
(21) Application number: 17871440.8
(22) Date of filing: 16.11.2017
(51) Int. Cl.: B60W 10/02, F16D 48/06

(54) **TARGET CLUTCH POSITION CONTROL METHOD BASED ON CLUTCH TORQUE TRANSMISSION CURVE**
VERFAHREN ZUR STEUERUNG EINER ZIELKUPPLUNGSPOSITION AUF DER BASIS EINER KUPPLUNGSDREHMOMENTÜBERTRAGUNGSKURVE
PROCÉDÉ DE COMMANDE DE POSITION D'EMBRAYAGE CIBLE BASÉ SUR UNE COURBE DE TRANSMISSION DE COUPLE D'EMBRAYAGE

(30) Priority: 17.11.2016 CN 201611011131
(43) Date of publication of application: 25.09.2019
(73) Proprietor: Wabco (China) Co., Ltd., Qingdao, Shandong 266510 (CN)
(72) Inventor: TENG, Yutang, Qingdao Shandong 266510 (CN)
(74) Representative: Eisenführ Speiser
(86) International application number: PCT/CN2017/111424
(87) International publication number: WO 2018/090958

(56) References cited:
- WO-A1-2012/171521
- WO-A1-2013/000450
- CN-A- 102 841 542
- CN-A- 103 244 663
- CN-A- 103 244 663
- CN-A- 104 847 811
- CN-A- 105 644 561
- CN-A- 105 697 585
- CN-A- 106 402 202

## Description

### Technical Field

The present invention relates to the technical field of automotive transmission control, and in particular to a target clutch position control method based on a clutch torque transmission curve.

### Background Art

A heavy truck may often encounter operating conditions in which the heavy truck needs to creep at a low speed (vehicle speed < 5 km/h), for example, an operating condition such as platform/trailer connecting, and vehicle garaging. In such operating conditions, the clutch position needs to be controlled stably and directly, so as to achieve a sensitive and controllable vehicle speed control performance.

CN 103244663 A discloses a method for controlling position engagement for a wet dual-clutch transmission using open-loop control and adaptive pressure adjustment.

CN 104847811 A discloses a clutch control method of a clutch for a hybrid power vehicle comprising: a vehicle controller sending a clutch transmission torque demand to a clutch controller, the clutch controller performing calculation and analysis on the received clutch transmission torque demand signal to obtain a required position of the clutch; obtaining the actual position of the clutch by a clutch position sensor; adjusting the position of the clutch according to the difference between the required position of the clutch and the actual position, so that the clutch moves to the required position; real-time acquisition of the actual position of the clutch by the position sensor, adjusting the direction of movement of the clutch until the required position is reached. The clutch is locked at the required position with the clutch controller calculating the current transmission torque of the clutch according to the current actual position of the clutch collected by the position sensor, and transmits the current transmission torque of the clutch to the vehicle controller, and the vehicle controller determining whether the transmission torque demand is reached; after the current transmission torque reaches the target demand, the vehicle controller performing the vehicle control.

The application publication CN 105644561 A (with patent application number 201510992443.8) discloses an AMT vehicle starting control method, and the method includes: detecting an engine speed, an engine torque, a current clutch position, and an accelerator pedal opening degree after a starting signal is detected; obtaining a change step length of a clutch position according to the engine speed and the engine torque, and obtaining a target clutch position and a clutch displacement speed according to the current clutch position and the change step length; obtaining a set engine speed according to the accelerator pedal opening degree; and performing starting control on the AMT vehicle according to the target clutch position, the clutch displacement speed, and the set engine speed. The method can implement control over the target clutch position. However, the method does not take the torque sensitivity of the clutch in different positions into consideration; therefore, different requirements of the clutch torque transmission feature change for the clutch engagement speed during different strokes cannot be satisfied. In said method, all clutch strokes use a fixed clutch engagement speed limitation. If the clutch engagement speed limitation is set to be extremely small according to said method, in an early stage (0 %-50 % of the stroke) of a clutch engagement stroke, the clutch-transmitted torque is not sensitive to the increase in the stroke, such a small clutch engagement speed limitation may cause a driver to press down on the accelerator, and the driver cannot sense the reaction of the vehicle in a short period of time. If the clutch engagement speed limitation is set to be extremely large according to the above-mentioned method, in a later stage (50 %-70 % of the stroke) of the clutch engagement stroke, the clutch-transmitted torque is extremely sensitive to the increase in the stroke, and such a large clutch engagement speed limitation cannot provide the function of reducing the clutch torque increasing speed so as to gain the time needed for an engine reaction.

Thus, it can be seen that the prior art needs to be further modified and improved.

### Summary of the Invention

In order to avoid the above-mentioned defects of the prior art, the present invention provides a target clutch position control method as is claimed in claim 1, which is based on a clutch torque transmission curve. Therein the method takes a difference in torque transmission sensitivity of a clutch in different positions into consideration, so as to ensure that the driver feels that vehicle control is linear and stable.

The technical solution adopted by the present invention is as follows:
a target clutch position control method based on a clutch torque transmission curve, wherein in the control method, a target torque calculation module and a change rate limitation module are added to a transmission control unit (TCU), and the control method comprises the following steps:
step 1: the target torque calculation module calculates a driver target clutch torque (ItdCltTrq) according to an accelerator pedal position;
step 2: an engine speed controller calculates a corresponding target engine speed (TS) according to the driver target clutch torque (ItdCltTrq);
step 3: the change rate limitation module calculates an allowable clutch torque change rate according to a difference between the target engine speed (TS) calculated in step 2 and a current engine speed (ES), that is, an allowable clutch torque change difference for one step length, and limits the currently calculated driver target clutch torque, wherein a target clutch torque obtained after the limitation is (ItdCltTrqLmt); and
step 4: the transmission control unit (TCU) calculates a target clutch position (ICP) according to the limited target clutch torque (ItdCltTrqLmt) by means of performing interpolation on a clutch torque transmission curve.

In the control method, an engine control unit (ECU) collects an accelerator pedal position signal (AP) and the current engine speed signal (ES), the engine control unit (ECU) is connected to the transmission control unit (TCU) by means of a data communication bus, and the engine control unit (ECU) sends the measured accelerator pedal position signal (AP) and current engine speed (ES) to the transmission control unit (TCU) by means of the data communication bus; and the transmission control unit (TCU) directly controls the inlet pressure of the clutch power cylinder to implement control over the target clutch position.

In the control method, an accelerator pedal sensor is added to the accelerator pedal position to measure the accelerator pedal position signal (AP), and the accelerator pedal sensor is connected to the engine control unit (ECU) of the vehicle.

In the control method, a speed sensor is added to an engine flywheel to measure the current engine speed (ES), and the speed sensor is connected to the engine control unit (ECU) of the vehicle.

The beneficial effects achieved by the present invention by adopting the above-described technical solution are as follows:
controlling the clutch position according to the clutch-transmitted torque curve of the present invention can ensure that the driver can stably and linearly control the clutch torque and the vehicle speed.

### Brief Description of the Drawings

Fig. 1 illustrates a curve for calculating a driver target clutch torque according to an accelerator pedal position in the present invention;
Fig. 2 illustrates a change state curve diagram of the driver target clutch torque in a case where an accelerator position exceeds a trigger position Trigger (AP), but does not reach a switch position (SwitchAP);
Fig. 3 illustrates a change state curve diagram of the driver target clutch torque in a case where the accelerator position exceeds the switch position (SwitchAP), but does not reach 100% of the accelerator position;
Fig. 4 illustrates a curve for calculating a target engine speed according to the driver target clutch torque;
Fig. 5 illustrates a change state curve diagram of the target engine speed relative to the driver target clutch torque;
Fig. 6 illustrates a logic block diagram of dynamically limiting a clutch engagement speed according to a difference between the target engine speed and a current engine speed;
Fig. 7 illustrates a change state curve diagram of the target engine speed (TS), the current engine speed (ES), a clutch-transmitted torque change amount Step, a limited target clutch torque, and the driver target clutch torque (ItdCltTrq);
Fig. 8 illustrates a curve for calculating a target clutch position according to a filtered driver target clutch torque in the present invention;
Fig. 9 illustrates a change state curve diagram of the clutch torque and the engine speed in an operating condition of quickly pressing down on and quickly lifting off an accelerator;.
Fig. 10 illustrates a change state curve diagram of the clutch torque and the engine speed in an operating condition of stable accelerator creep implemented according to the control method of the present invention.

### Detailed Description of Embodiments

The present invention is further described below in details with reference to the drawings and the specific embodiments, while the present invention is not limited to these embodiments.

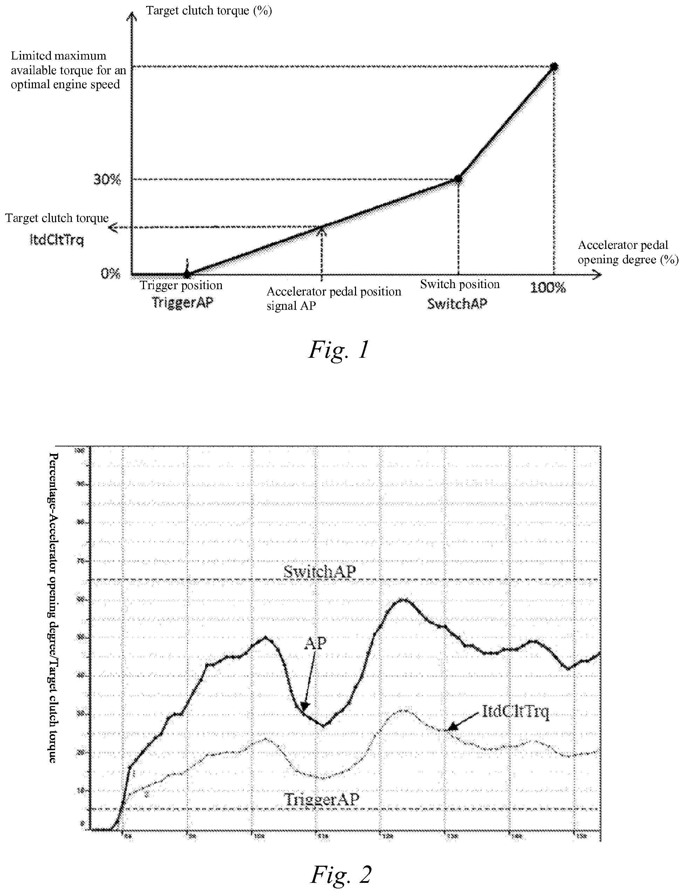

As shown in Fig. 1 to Fig. 4, a target clutch position control method based on a clutch torque transmission curve is provided. In the control method, an accelerator pedal sensor is added at an accelerator pedal position to measure an accelerator pedal position signal AP, a speed sensor is added to an engine flywheel to measure a current engine speed ES, and both the accelerator pedal sensor and the speed sensor are connected to an engine control unit ECU of a vehicle. The engine control unit ECU is used to collect the accelerator pedal position signal AP and the current engine speed signal ES and is connected to a transmission control unit TCU by means of a data communication bus, and the engine control unit ECU sends the measured accelerator pedal position signal AP and current engine speed ES to the transmission control unit TCU by means of the data communication bus. In addition, the TCU sends an engine control request packet comprising a target engine speed TS to the engine control unit ECU by means of the data communication bus, so as to implement engine speed control. The data communication bus can be any network protocol bus that satisfies a standard definition, for example, J1922, J1939, ISO11898, or the like.

In the control method, a target torque calculation module and a change rate limitation module are added to the transmission control unit TCU.

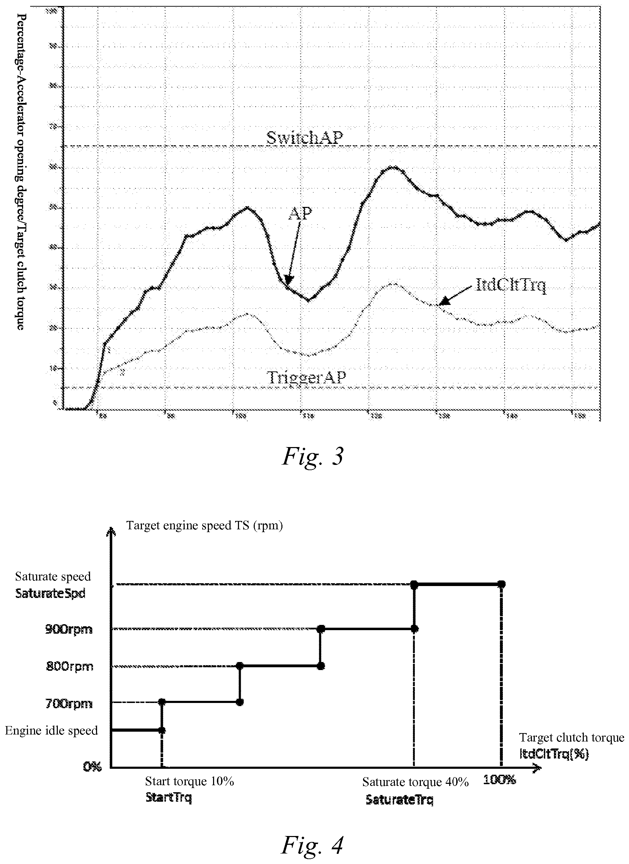

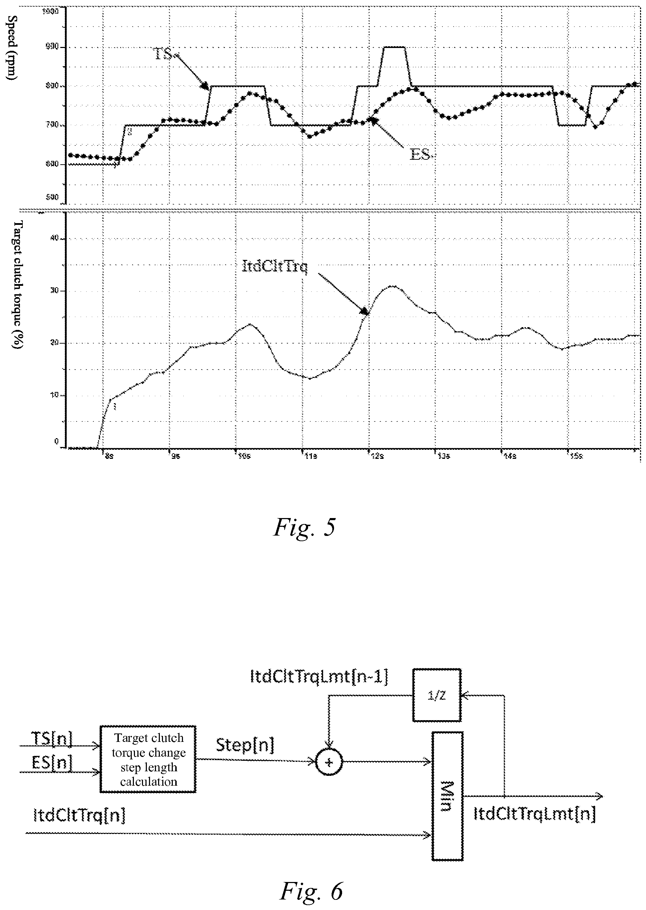

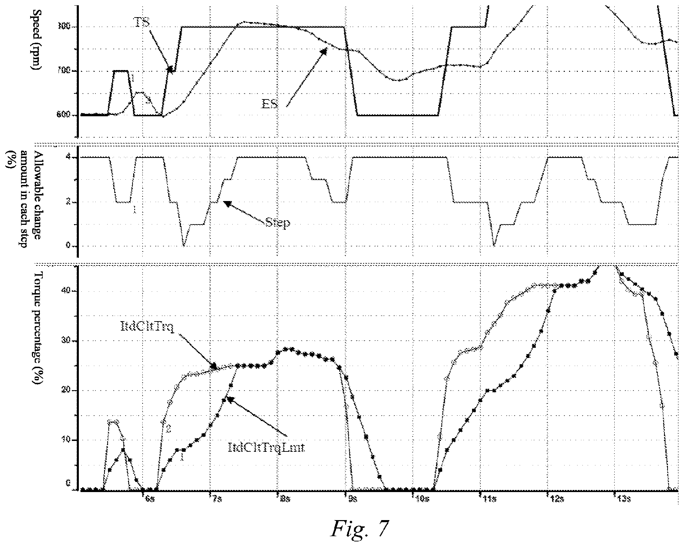

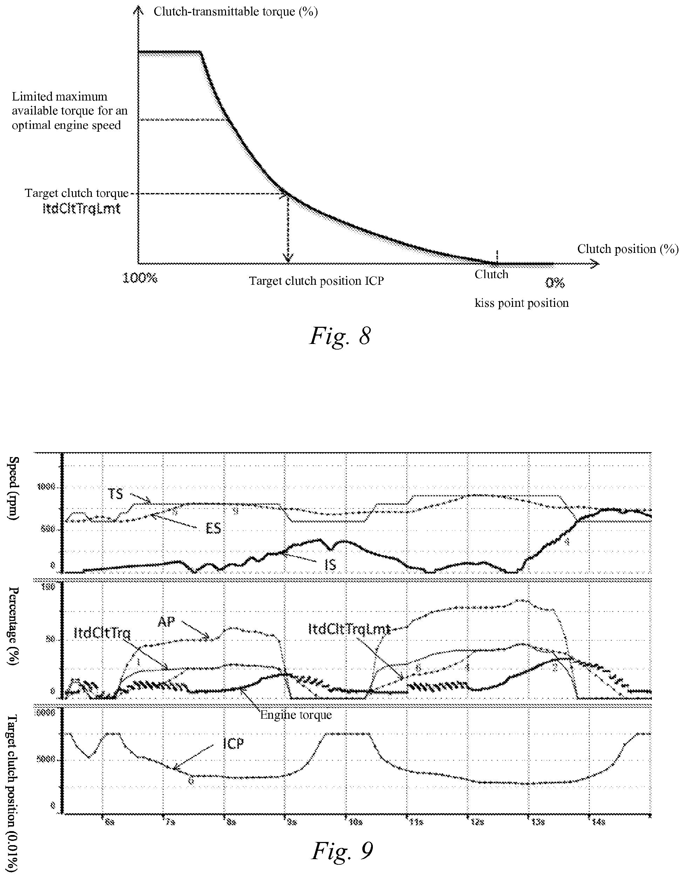

The control method comprises the following steps:
Step 1: the target torque calculation module calculates a driver target clutch torque ItdCltTrq according to the accelerator pedal position by means of the curve shown in Fig. 1. Fig. 1 illustrates the curve for calculating the driver target clutch torque according to the accelerator pedal position. The curve is determined by means of experimental calibration, so as to implement different system sensitivity responses in different accelerator opening degrees. When the driver pushes down on an accelerator to a position that exceeds a trigger position TriggerAP (5 % of the accelerator stroke), the driver target clutch torque slowly increases along with the increase in the accelerator stroke. As shown in Fig. 2, when the accelerator position exceeds the trigger position TriggerAP, but does not reach a switch position SwitchAP (65 % of the accelerator stroke), the driver target clutch torque ItdCltTrq is calculated by means of the curve shown in Fig. 1, and the driver target clutch torque ItdCltTrq proportionally changes within a range of 0 %-35 % of a rated engine torque. When the accelerator position reaches the switch position SwitchAP, the driver target clutch torque rapidly increases along with the increase in the accelerator stroke. As shown in Fig. 3, when the accelerator position exceeds the switch position SwitchAP (65 % of the accelerator stroke), but does not reach 100 % of the accelerator position, the driver target clutch torque ItdCltTrq is calculated by means of the curve shown in Fig. 1, and the driver target clutch torque ItdCltTrq proportionally changes within a range of 35 %-50 % of the rated engine torque. When the accelerator position reaches 100 % of the accelerator position, the driver target clutch torque reaches the available torque corresponding to an optimal transient engine speed. The optimal transient engine speed and the available torque corresponding thereto are obtained by means of experimental calibration of the engine. For a heavy pressurized diesel engine, under the effects of both an external characteristic limitation and a smoke intensity limitation, the maximum transient torque reachable for the engine varies according to different speeds. The maximum transient available torque is limited by an external characteristic when the speed is relatively low. The maximum transient available torque is limited by smoke intensity control when the speed is relatively high. The transient available torque reaches a maximum value under the optimal transient speed. Therefore, in a creep operating condition in which the engine needs to respond quickly, a maximum value of the target clutch torque curve is set to the available torque corresponding to the optimal transient speed.
Step 2: an engine speed controller calculates a corresponding target engine speed TS according to the driver target clutch torque ItdCltTrq by means of the pre-calibrated curve shown in Fig. 4. Fig. 4 illustrates the curve for calculating the target engine speed according to the target clutch torque, wherein the curve is obtained by means of experimental calibration according to an engine speed controller performance. In the curve, the required torque output by the engine speed controller basically corresponds to a speed difference required by a proportional control link. As shown in Fig. 4 and Fig. 5, when the target clutch torque is less than a starting torque StartTrq, the target engine speed is kept at an idle speed. The target engine speed gradually increases along with the increase in the target clutch torque, and the target engine speed reaches a saturated speed SaturateSpd when the target clutch torque reaches a saturated torque SaturateTrq. Specifically, the target engine speed TS increases by 100 rpm each time that the driver target clutch torque increases by 10 %. The starting torque StartTrq, the saturated torque SaturateTrq, and the saturated speed SaturateSpd are all determined by means of calibration according to an engine speed controller performance.
Step 3: the change rate limitation module calculates an allowable clutch torque change rate according to a difference between the target engine speed TS calculated in step 2 and the current engine speed ES, that is, an allowable clutch torque change difference for one step length, and limits the currently calculated driver target clutch torque, and as shown in Fig. 6, a target clutch torque obtained after the limitation is ItdCltTrqLmt. In Fig. 6, TS[n] is a target engine speed of a current calculation step, ES[n] is an actual engine speed of the current calculation step, ItdCltTrq[n] is a target clutch torque of the current calculation step, ItdCltTrqLmt[n-1] is a limited target clutch torque of the last calculation step, ItdCltTrqLmt[n] is a limited target clutch torque of the current calculation step obtained by a final calculation, Step[n] is an allowable clutch-transmitted torque change amount of the current calculation step, Min represents searching for a minimum value between two input signals, and 1/Z represents temporarily storing a calculation result of the last step. Fig. 7 illustrates a change state curve diagram of the target engine speed TS, the current engine speed ES, a clutch-transmitted torque change amount Step, a limited target clutch torque, and the driver target clutch torque ItdCltTrq. It can be seen from Fig. 7 that the change rate limitation module calculates the allowable clutch-transmitted torque change amount Step at a corresponding calculation point according to the difference between TS and ES, and a change amount of the limited target clutch torque in each calculation step cannot exceed the allowable torque change amount Step at the corresponding calculation point.
Step 4: the transmission control unit TCU calculates a target clutch position ICP according to the limited target clutch torque ItdCltTrqLmt by means of performing interpolation on the clutch torque transmission curve shown in Fig. 8. The TCU directly controls the inlet pressure of a clutch power cylinder to implement control over the target clutch position. Fig. 8 illustrates a curve for calculating the target clutch position according to a filtered driver target clutch torque. The curve reflects a change in the maximum torque that can be transmitted by the clutch during different strokes, and the curve is obtained by means of automatic transmission AMT software algorithm self-identification during a normal starting and traveling process of the vehicle. The clutch does not transmit torque before the clutch position reaches a clutch kiss point KP. From the clutch kiss point KP position, the maximum torque that can be transmitted by the clutch gradually increases, and when the clutch engages more deeply, a change rate of the maximum torque that can be transmitted by the clutch becomes larger along with the change in the position.

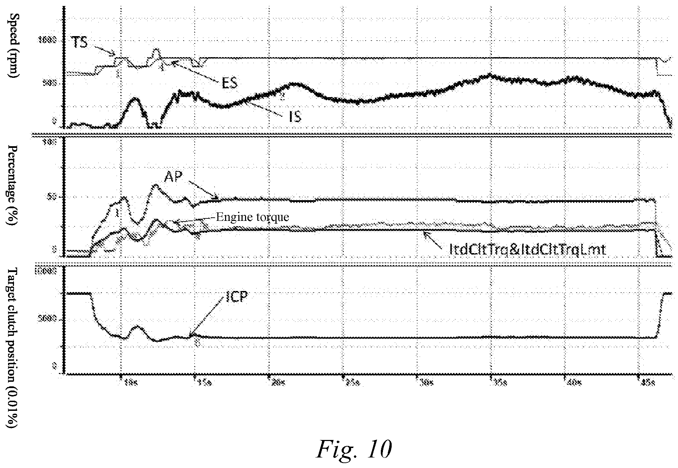

Fig. 9 illustrates a change state curve diagram of the clutch torque and the engine speed in an operating condition of quickly pressing down on and quickly lifting off an accelerator. Fig. 10 illustrates a change state curve diagram of the clutch torque and the engine speed in an operating condition of stable accelerator creep implemented according to the control method of the present invention. It can be found by comparing Fig. 9 and Fig. 10 that controlling the clutch position according to the clutch torque transmission curve of the present invention can ensure that a driver can stably and linearly control clutch torque and a vehicle speed.

The specific embodiments described in the text are merely descriptive examples of the spirit of the present invention. One skilled in the art would be able to make various modifications or supplements to the described specific embodiments or substitutions in similar manners, without deviating from the the scope defined by the attached claims.

## Claims

1. A target clutch position control method based on a clutch torque transmission curve wherein in the control method, a target torque calculation module and a change rate limitation module are added to a transmission control unit (TCU) of a vehicle, and the control method comprises the following steps:
- in a first step, the target torque calculation module calculates a driver target clutch torque (ItdCltTrq) according to an accelerator pedal position;
- in a second step, an engine speed controller calculates a corresponding target engine speed (TS) according to the driver target clutch torque (ItdCltTrq); **characterised in that**
- in a third step, the change rate limitation module calculates an allowable clutch torque change rate according to a difference between the target engine speed (TS) calculated in the second step and a current engine speed (ES), that is, an allowable clutch torque change difference for one step length, and limits the currently calculated driver target clutch torque, wherein a target clutch torque obtained after the limitation is a limited target clutch torque (ItdCltTrqLmt); and
- in a fourth step, the transmission control unit (TCU) calculates a target clutch position (ICP) according to the limited target clutch torque (ItdCltTrqLmt) by means of performing an interpolation on the clutch torque transmission curve.

2. The target clutch position control method based on a clutch torque transmission curve, as claimed in claim 1, **characterized in that** in the control method,
- an engine control unit (ECU) collects an accelerator pedal position signal (AP) and a current engine speed signal, the engine control unit (ECU) is connected to the transmission control unit (TCU) by means of a data communication bus, and
- the engine control unit (ECU) sends the measured accelerator pedal position signal (AP) and the current engine speed (ES) to the transmission control unit (TCU) by means of the data communication bus; and
- the transmission control unit (TCU) directly controls the inlet pressure of a clutch power cylinder to implement control over the target clutch position.

3. The target clutch position control method based on a clutch torque transmission curve, as claimed in claim 2, **characterized in that**
in the control method, an accelerator pedal sensor is added to the accelerator pedal position to measure the accelerator pedal position signal (AP), and the accelerator pedal sensor is connected to the engine control unit (ECU) of the vehicle.

4. The target clutch position control method based on a clutch torque transmission curve, as claimed in claim 2, **characterized in that**
in the control method, a speed sensor is added to an engine flywheel to measure the current engine speed (ES), and the speed sensor is connected to the engine control unit (ECU) of the vehicle.

## Patentansprüche

1. Verfahren zum Steuern einer Soll-Kupplungsposition basierend auf einer Kupplungsdrehmoment-Übertragungskurve, wobei
in dem Verfahren zum Steuern ein Soll-Drehmoment-Berechnungsmodul und ein Änderungsraten-Begrenzungsmodul zu einer Getriebe-Steuereinheit (TCU) eines Fahrzeugs hinzugefügt werden, und das Verfahren zum Steuern die folgenden Schritte aufweist:
- in einem ersten Schritt berechnet das Soll-Drehmoment-Berechnungsmodul ein Fahrer-Soll-Kupplungsdrehmoment (ItdCltTrq) in Abhängigkeit einer Beschleunigungspedal-Position,
- in einem zweiten Schritt berechnet ein Motorgeschwindigkeitsregler eine entsprechende Soll-Motorgeschwindigkeit (TS) in Abhängigkeit des Fahrer-Soll-Kupplungsdrehmoments (ItdCltTrq),
**dadurch gekennzeichnet, dass**
- das Änderungsraten-Begrenzungsmodul in einem dritten Schritt eine zulässige Kupplungsdrehmoment-Änderungsrate in Abhängigkeit einer Differenz zwischen der im zweiten Schritt berechneten Soll-Motorgeschwindigkeit (TS) und einer momentanen Motorgeschwindigkeit (ES) berechnet, das heißt, eine zulässige Kupplungsdrehmoment-Änderungs-Differenz für eine Schrittlänge, und das momentan berechnete Fahrer-Soll-Kupplungsdrehmoment begrenzt, wobei ein nach der Begrenzung erhaltenes Soll-Kupplungsdrehmoment ein begrenztes Soll-Kupplungsdrehmoment ist (ItdCltTrqLmt); und
- in einem vierten Schritt die Getriebe-Steuereinheit (TCU) eine Soll-Kupplungsposition (ICP) in Abhängigkeit des begrenzten Soll-Kupplungsdrehmoments (ItdCltTrqLmt) berechnet, indem eine Interpolation auf der Kupplungsdrehmoment-Übertragungskurve durchgeführt wird.

2. Das Verfahren zum Steuern einer Soll-Kupplungsposition basierend auf einer Kupplungsdrehmoment-Übertragungskurve wie beansprucht in Anspruch 1, **dadurch gekennzeichnet, dass** in dem Verfahren zum Steuern,
- eine Motor-Steuereinheit (ECU) ein Beschleunigungspedal-Positionssignal (AP) und ein momentanes Motorgeschwindigkeits-Signal erfasst, die Motor-Steuereinheit (ECU) mit der Getriebe-Steuereinheit (TCU) mittels eines Datenkommunikations-Bus verbunden ist, und
- die Motor-Steuereinheit (ECU) das gemessene Beschleunigungspedal-Positionssignal (AP) und die momentane Motorgeschwindigkeit (ES) mittels des Datenkommunikations-Bus an die Getriebe-Steuereinheit (TCU) schickt; und
- die Getriebe-Steuereinheit (TCU) den Eingangsdruck eines Kupplungs-Kraftzylinders direkt steuert, um ein Steuern der Soll-Kupplungsposition zu erwirken.

3. Das Verfahren zum Steuern einer Soll-Kupplungsposition basierend auf einer Kupplungsdrehmoment-Übertragungskurve wie beansprucht in Anspruch 2, **dadurch gekennzeichnet, dass**
- in dem Verfahren zum Steuern ein Beschleunigungspedal-Sensor zu der Beschleunigungspedal-Position zum Messen des Beschleunigungspedal-Positionssignals (AP) hinzugefügt wird, und der Beschleunigungspedal-Sensor mit der Motor-Steuereinheit (ECU) des Fahrzeugs verbunden ist.

4. Das Verfahren zum Steuern einer Soll-Kupplungsposition basierend auf einer Kupplungsdrehmoment-Übertragungskurve wie beansprucht in Anspruch 2, **dadurch gekennzeichnet, dass**
- in dem Verfahren zum Steuern ein Geschwindigkeitssensor zu einem Motorschwungrad hinzugefügt wird, um die momentane Motorgeschwindigkeit (ES) zu bestimmen, und der Geschwindigkeitssensor mit der Motor-Steuereinheit (ECU) des Fahrzeugs verbunden ist.

## Revendications

1. Procédé de commande d'une position d'embrayage cible sur la base d'une courbe de transmission du couple d'embrayage, dans lequel
dans le procédé de commande, on adjoint un module de calcul d'un couple cible et un module de limitation du taux de variation à une unité (TCU) de commande de transmission d'un véhicule et le procédé de commande comprend les stades suivants :
- dans un premier stade, le module de calcul d'un couple cible calcule un couple (ItdCltTrq) d'embrayage cible du conducteur en fonction d'une position de la pédale de l'accélérateur;
- dans un deuxième stade, une unité de commande de la vitesse du moteur calcule une vitesse (TS) du moteur cible correspondante en fonction du couple (ItdCltTrq) d'embrayage cible du conducteur ; **caractérisé en ce que**
- dans un troisième stade, le module de limitation du taux de variation calcule un taux de variation acceptable du couple d'embrayage en fonction d'une différence entre la vitesse (TS) du moteur cible calculée dans le deuxième stade et une vitesse (ES) du moteur en cours, c'est-à-dire une différence admissible de changement du couple d'embrayage pour une longueur de stade, et limite le couple d'embrayage cible du conducteur calculé en cours, dans lequel un couple d'embrayage cible obtenu après la limitation est un couple (ItdCltTrqLmt) d'embrayage cible limité ; et
- dans un quatrième stade, l'unité (TCU) de commande de transmission calcule une position (ICP) d'embrayage cible en fonction du couple (ItdCltTrqLmt) d'embrayage cible limité en effectuant une interpolation sur la courbe de transmission du couple d'embrayage.

2. Procédé de commande d'une position d'embrayage cible sur la base d'une courbe de transmission du couple d'embrayage, tel que revendiqué à la revendication 1, **caractérisé en ce que** dans le procédé de commande,
- une unité (ECU) de commande du moteur recueille un signal (AP) de position de la pédale de l'accélérateur et un signal en cours de la vitesse du moteur, l'unité (ECU) de commande du moteur étant connectée à l'unité (TCU) de commande de la transmission au moyen d'un bus de communication de données, et
- l'unité (ECU) de commande du moteur envoie le signal (AP) mesuré de la position de la pédale de l'accélérateur et la vitesse (ES) en cours du moteur à l'unité (TCU) de commande de la transmission au moyen du bus de communication de données ; et
- l'unité (TCU) de commande de la transmission commande directement la pression d'entrée d'un cylindre de puissance d'embrayage pour mettre en œuvre une commande de la position d'embrayage cible.

3. Procédé de commande d'une position d'embrayage cible sur la base d'une courbe de transmission du couple d'embrayage, suivant la revendication 2, **caractérisé en ce que**
dans le procédé de commande, un capteur de la pédale de l'accélérateur est adjoint à la position de la pédale de l'accélérateur, pour mesurer le signal (AP) de la position de la pédale de l'accélérateur et le capteur de la pédale de l'accélérateur est relié à l'unité (ECU) de commande du moteur du véhicule.

4. Procédé de commande d'une position d'embrayage cible sur la base d'une courbe de transmission du couple d'embrayage, suivant la revendication 2, **caractérisé en ce que**,
dans le procédé de commande, un capteur de vitesse est adjoint à un volant du moteur, pour mesurer la vitesse (ES) en cours du moteur et le capteur de vitesse est relié à l'unité (ECU) de commande du moteur du véhicule.
